# EUROPEAN PATENT APPLICATION

(11) **EP 2 239 726 A1**
(43) Date of publication of application: **13.10.2010**
(21) Application number: 10733398.1
(22) Date of filing: 06.01.2010
(51) Int. Cl.: G09G 5/36, G02B 27/22, G09G 5/00, H04N 13/04

(54) **IMAGE PROCESSING APPARATUS, IMAGE PROCESSING METHOD AND PROGRAM**

(30) Priority: 21.01.2009 JP 2009010468
(71) Applicant: Sony Corporation, Tokyo 108-0075 (JP)
(72) Inventor: HATASAWA, Yasunari, Minato-ku Tokyo 108-0075 (JP); UEDA, Kazuhiko, Minato-ku Tokyo 108-0075 (JP); OGATA, Masami, Minato-ku Tokyo 108-0075 (JP)
(74) Representative: Davies, Simon Robert
(86) International application number: PCT/JP2010/050051
(87) International publication number: WO 2010/084791

(57) **Abstract**

The format of an input image is determined appropriately, and an appropriate output image adapted to a format that can be displayed on a display section is displayed.

An image format determining section 120 determines whether an image inputted to an image input section 110 is in the image format for a plane display image or is in the image format for a stereo display image. A displayable format determining section 160 determines a displayable format of an output image which can be displayed on an image display section 170. An operational input accepting section 150 accepts the output format of the output image displayed on the image display section 170 as a designated display format. An output format determining section 130 determines the output format of the output image on the basis of the image format, the displayable format, and the designated display format. An output image creating section 140 creates the output image from the input image on the basis of this output format for display on the image display section 170.

## Description

### Technical Field

The present invention relates to an image processing apparatus, in particular, an image processing apparatus which performs a determination process for displaying a plane image or a stereo image, and a processing method for these and a program for causing a computer to execute the method.

### Background Art

In the related art, stereo display techniques have been proposed which display an image on the screen of a display device, and make this image visible to the user three-dimensionally (stereoscopically). For example, a Micropol system exists in which a stereo display image having a right eye image or a left eye image placed alternately at each one vertical pixel is displayed on a screen to which a polarizing filter is fixed, thereby separating an image incident on the right eye and an image incident on the left eye from each other. Also, for example, a time division system exists in which a right eye image and a left eye image are displayed alternately at equal time intervals, and the right eye image incident on the right eye and the left eye image incident on the left eye are separated from each other by using glasses. Either of the systems allows the user to view an image stereoscopically by making use of the parallax between the image incident on the right eye and the image incident on the left eye.

In these systems, for example, a stereo display image in which a right eye image and a left eye image are placed in alignment is inputted to an image processing apparatus, and on the basis of this stereo display image, a stereo image to be displayed on a display device is created. Today, a number of such stereo display images are beginning to be created for movies and broadcasting. However, for example, in a case when a stereo display image is being distributed by broadcasting, since an existing plane display image is used for CM (Commercial Message) or the like, the stereo display image and the plane display image are distributed while being mixed with each other. In this case, if a stereo image is created on the basis of the plane display image, an image that cannot be viewed by the user is displayed on the display device. Therefore, whether the distributed image is a stereo display image or a plane display image needs to be determined at the image processing apparatus.

Accordingly, for example, a stereo image display system has been proposed which attaches identification information to an image to be distributed to thereby determine whether the distributed image is a plane display image or a stereo display image (for example, PTL 1). In this system, an image is distributed to a display device via a network after attaching identification information to the image on the side of a server that distributes the image, and the identification information attached to the image is referenced on the side of the display device, thereby determining whether this image is a plane display image or a stereo display image. If the display device references the identification information attached to the distributed image and determines that this image is a stereo display image, the display device creates a stereo image based on the stereo display image and displays this on the screen.

### Citation List

### Patent Literature

PTL 1: Japanese Unexamined Patent Application Publication No. 2005-175566 (Fig. 1)

### Summary of Invention

### Technical Problem

However, the above prior art technique requires, for example, both a server that attaches identification information, and a display device that determines this identification information. Therefore, if an image is distributed from a server that does not have the function of attaching identification information, it is difficult for a display device according to the related art to accurately determine whether the image is a plane display image or a stereo display image. Further, if the image format of the distributed image is an image format that cannot be properly displayed by the display device, there is a fear that an image that cannot be viewed properly by the user is displayed.

The present invention has been made in view of the above-mentioned problems, and its object is to determine the format of an image appropriately, and also display an appropriate image adapted to a format that can be displayed on a display section.

### Solution to Problem

The present invention has been made to solve the above-mentioned problems, and its first aspect relates to an image processing apparatus, and a processing method therefor and a program for causing a computer to execute the method, the image processing apparatus including an image format determining section that determines whether an image format of an input image is an image format for a plane display image viewed by monocular vision, or is an image format for a stereo display image including a right eye image region and a left eye image region, a displayable format determining section that determines a displayable format of an output image which can be displayed on a display section, an output format determining section that determines an output format of the output image displayed on the display section on the basis of the image format and the displayable format, and an image creating section that creates the output image from the input image on the basis of the output format determined by the output format determining section. This provides such an operation in which the image format of an input image is determined, the displayable format of an output image which can be displayed on the display section is determined, the output format of the output image is determined on the basis of the image format and the displayable format, and the output image is created from the input image on the basis of this output format.

Also, in this first aspect, the image format determining section may split the input image into two split images and discriminate whether or not the two split images are similar to each other, and determine the image format of the input image to be the image format for the stereo display image if the two split images are similar to each other. This provides such an operation in which the image format determining section discriminates whether or not two split images are similar to each other, and determines the image format of an input image to be the image format for a stereo display image if the two split images are similar to each other.

Also, in this first aspect, the image format determining section may perform the discrimination of the similarity by splitting one of the two split images further into a plurality of regions, and comparing, for each of the plurality of regions, an image in the region with an image corresponding to the region in the other of the two split images. This provides such an operation in which for each of a plurality of regions, the image in this region and the image corresponding to this region in the other of two split images are compared with each other.

Also, in this first aspect, there may be further provided an accepting section that accepts an output format of the output image displayed on the display section as a designated display format, and the output format determining section may determine the output format of the output image on the basis of the image format, the displayable format, and the designated display format. This provides such an operation in which the output format determining section determines the output format of an output image on the basis of an image format, a displayable format, and a designated display format.

Also, in this first aspect, there may be further provided a holding section that holds the output format in association with each combination of the image format, the displayable format, and the designated display format, and the output format determining section may identify the output format held by the holding section on the basis of a combination of the image format determined by the image format determining section, the displayable format determined by the displayable format determining section, and the designated display format accepted by the accepting section, and determine the identified output format to be the output format of the output image. This provides such an operation in which the output format determining section identifies the output format held in the holding section on the basis of a combination of an image format, a displayable format, and a designated display format, and determines this output format to be the output format of an output image. Advantageous Effects of Invention

According to the present invention, it is possible to produce such an excellent effect that the format of an input image is determined appropriately, and an appropriate image adapted to a format that can be displayed on the display section is displayed.

### Brief Description of Drawings

[Fig. 1] Fig. 1 is a block diagram showing an example of the configuration of an image processing apparatus 100 according to a first embodiment of the present invention.
[Fig. 2] Fig. 2 is a block diagram showing an example of the configuration of an image format determining section 120 according to the first embodiment of the present invention.
[Fig. 3] Fig. 3 is a block diagram showing an example of the configuration of an output format determining section 130 according to the first embodiment of the present invention.
[Fig. 4] Fig. 4 is a block diagram showing an example of the configuration of an output image creating section 140 according to the first embodiment of the present invention.
[Fig. 5] Fig. 5 is a diagram showing an example of a likelihood calculation process in which a likelihood is calculated by an SBS-format-likelihood calculation processing section 122 according to the first embodiment of the present invention.
[Fig. 6] Fig. 6 is a diagram showing an example of a likelihood calculation process in which a likelihood is calculated by the SBS-format-likelihood calculation processing section 122 according to the first embodiment of the present invention.
[Fig. 7] Fig. 7 is a diagram showing an example of a likelihood calculation process in which a likelihood is calculated by the SBS-format-likelihood calculation processing section 122 according to the first embodiment of the present invention.
[Fig. 8] Fig. 8 is a diagram showing an example of a likelihood calculation process in which a likelihood is calculated by a TAB-format-likelihood calculation processing section 123 according to the first embodiment of the present invention.
[Fig. 9] Fig. 9 is a diagram for explaining an example in which a right eye image and a left eye image are created from a plane display image by a stereo image creating section 145 according to the first embodiment of the invention.
[Fig. 10] Fig. 10 is a diagram showing an example of a stereo image according to the first embodiment of the present invention.
[Fig. 11] Fig. 11 is a flowchart showing the processing steps of an image determination process by the image processing apparatus 100 according to the first embodiment of the present invention.
[Fig. 12] Fig. 12 is a flowchart showing the processing steps of an image analysis process (step S903) by the image processing apparatus 100 according to the first embodiment of the present invention.
[Fig. 13] Fig. 13 is a flowchart showing the processing steps of a likelihood calculation process by the image processing apparatus 100 according to the first embodiment of the present invention.
[Fig. 14] Fig. 14 is a flowchart showing the processing steps of an output format determination process by the image processing apparatus 100 according to the first embodiment of the present invention.
[Fig. 15] Fig. 15 is a flowchart showing the processing steps of an output image creation process by the image processing apparatus 100 according to the first embodiment of the present invention.
[Fig. 16] Fig. 16 is a block diagram showing an example of the configuration of an image processing apparatus 105 according to a second embodiment of the present invention.
[Fig. 17] Fig. 17 is a diagram showing an example of output format determination information 801 according to the second embodiment of the present invention.
[Fig. 18] Fig. 18 is a block diagram showing an example of the configuration of an output format determining section 130 according to the second embodiment of the present invention.
[Fig. 19] Fig. 19 is a flowchart showing the processing steps of an output format determination process according to the second embodiment of the present invention.

### Description of Embodiments

Hereinbelow, the best modes for carrying out the present invention (hereinafter, referred to as embodiments) will be described. The description will be given in the following order.
1. First Embodiment (output image creation control:
   example of determining an output format on the basis of an output format determination process)
2. Second Embodiment (output image creation control:
   example of determining an output format on the basis of output format determination information)

### <1. First Embodiment>

### [Example of Internal Configuration of Image Processing Apparatus]

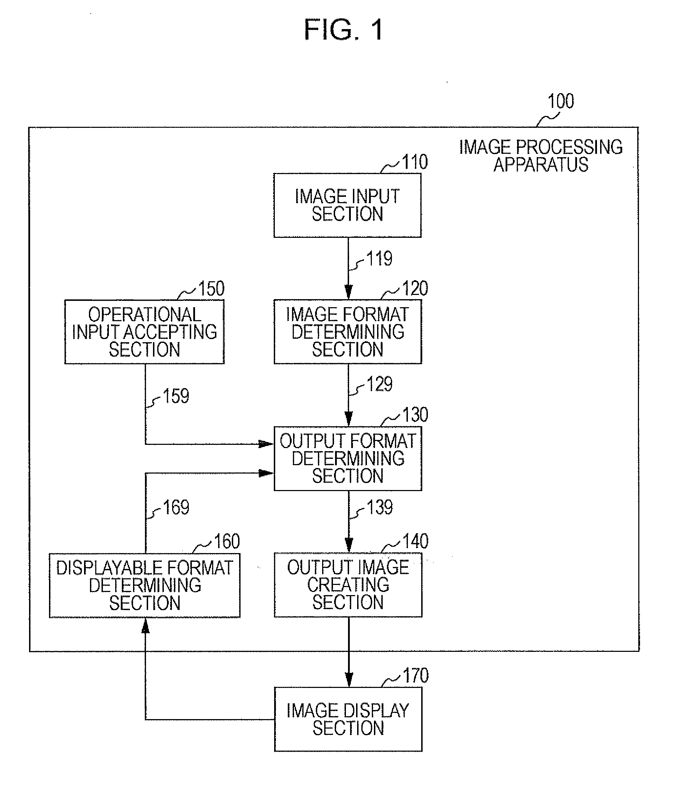

Fig. 1 is a block diagram showing an example of the configuration of an image processing apparatus 100 according to a first embodiment of the present invention. The image processing apparatus 100 includes an image input section 110, an image format determining section 120, an output format determining section 130, an output image creating section 140, an operational input accepting section 150, and a displayable format determining section 160. Also, the output image creating section 140 and the displayable format determining section 160 of the image processing apparatus 100 are connected to an image display section 170.

The image input section 110 is for inputting a plane display image or a stereo display image as an input image. The image input section 110 outputs this input image to the image format determining section 120 via a signal line 119. It should be noted that a plane display image is an image viewed by monocular vision. Also, a stereo display image is an image made up of a right eye image region and a left eye image region.

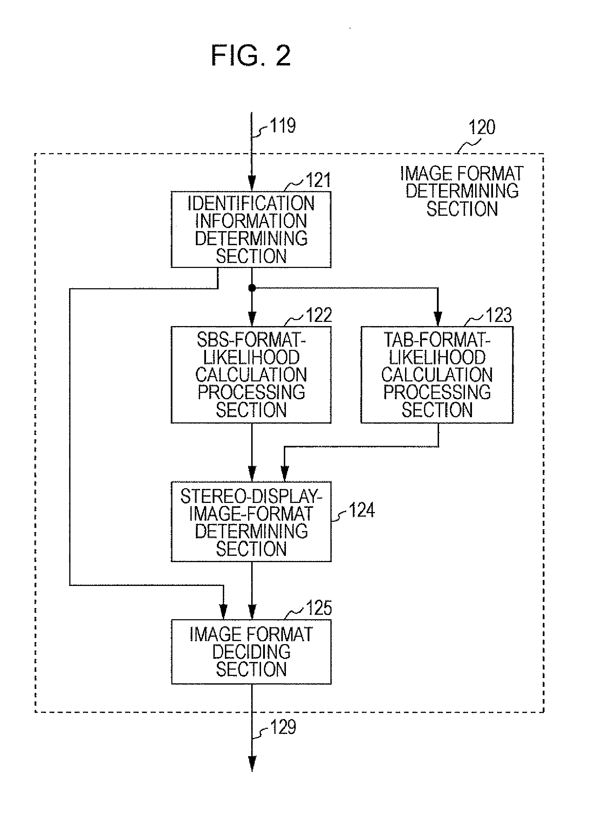

The image format determining section 120 determines whether or not an input image outputted from the image input is in the image format for a plane display image or is in the image format for a stereo display image. The image format determining section 120 outputs the input image and the determined image format to the output format determining section 130 via a signal line 129. The image format determining section 120 may determine the image format on the basis of identification information attached to the input image, for example. Also, for example, the image format determining section 120 may determine whether or not an input image is in the image format for a stereo display image by evaluating, with respect to split images obtained by splitting the input image in half, whether or not the respective split images are similar. It should be noted that as information included in the image format, for example, "two-dimensional", "SBS", "TAB", and the like are conceivable. Here, "two-dimensional" indicates a plane display image. Also, "SBS" indicates a stereo display image in the SBS (Side-By-Side) format in which a left eye image and a right eye image are placed on the left and the right, respectively. Also, "TAB" indicates a stereo display image in the TAB (Top And Bottom) format in which a left eye image and a right eye image are placed at the top and the bottom, respectively. It should be noted that an example of functional configuration realized by the image format determining section 120 will be described in detail with reference to Fig. 2.

The operational input accepting section 150 accepts the output format of an output image to be displayed on the image display section 170 from the user as a designated display format. The operational input accepting section 150 outputs the designated display format to the output format determining section 130 via a signal line 159. For example, when the user operates a remote control, an output format desired by the user is transmitted from the remote control, and the operational input accepting section 150 outputs the received output format desired by the user to the output format determining section 130 as a designated display format. It should be noted that as information included in the designated display format, for example, "two-dimensional", "three-dimensional", "automatic selection", and the like are conceivable. Here, "two-dimensional" indicates that it is instructed to display a plane image on the image display section 170. Also, "three-dimensional" indicates that it is instructed to display a stereo image on the image display section 170. Also, "automatic selection" indicates that either one of a plane image and a stereo image may be displayed on the image display section 170. It should be noted that the operational input accepting section 150 is an example of an accepting section described in the claims.

The displayable format determining section 160 determines a displayable format of an output image which can be displayed by the image display section 170. The displayable format determining section 160 outputs this displayable format to the output format determining section 130 via a signal line 169. For example, the image display section 170 holds the displayable format of an output image which can be outputted, and the displayable format determining section 160 acquires this displayable format from the image display section 170. It should be noted that as information included in the displayable format, for example, "two-dimensional", "two-dimensional, Mpol", "two-dimensional, time division", and the like are conceivable. Here, "two-dimensional" indicates that the image display section 170 can display only a plane image. Also, "two-dimensional, Mpol" indicates that the image display section 170 can display a plane image, or a stereo image based on the Micropol (Mpol) system. Also, "two-dimensional, time division" indicates that the image display section 170 can display a plane image, or a stereo image based on the time division system. It should be noted that in the following, if the stereo image system is either the Micropol system or the time division system, the system will be referred to as three-dimensional system in the description.

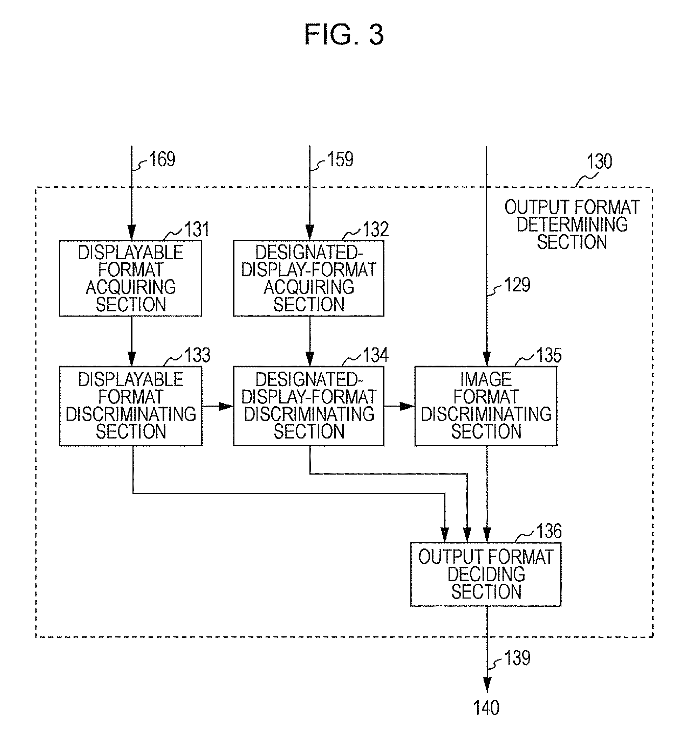

The output format determining section 130 determines the output format of an output image displayed on the image display section 170, on the basis of an image format, a designated display format, and a displayable format. The output format determining section 130 outputs an input image and the determined output format to the output image creating section 140 via a signal line 139. It should be noted that as information included in the output format, for example, "two-dimensional", "Mpol", "time division", and the like are conceivable. Here, "two-dimensional" indicates that a plane image is displayed on the image display section 170. Also, "Mpol" indicates that a stereo image based on the Micropol system is displayed on the image display section 170. Also, "time division" indicates that a stereo image based on the time division system is displayed on the image display section 170. It should be noted that an example of functional configuration realized by the output format determining section 130 will be described in detail with reference to Fig. 3.

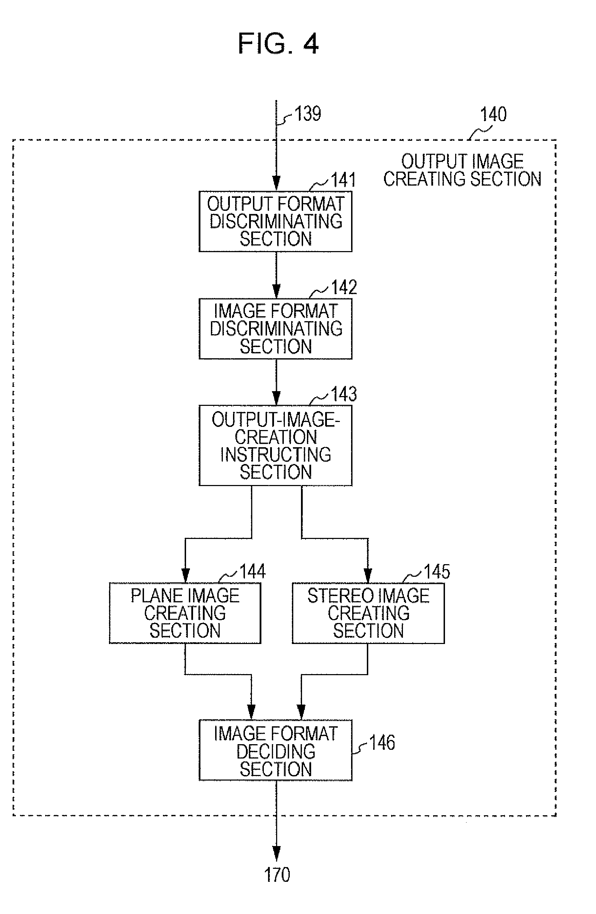

The output image creating section 140 creates an output image from an input image on the basis of the output format determined by the output format determining section 130.
The output image creating section 140 outputs the created output image to the image display section 170 to display this. It should be noted that the output image creating section 140 is an example of an image creating section described in the claims. It should be noted that an example of functional configuration realized by the output image creating section 140 will be described in detail with reference to Fig. 4.

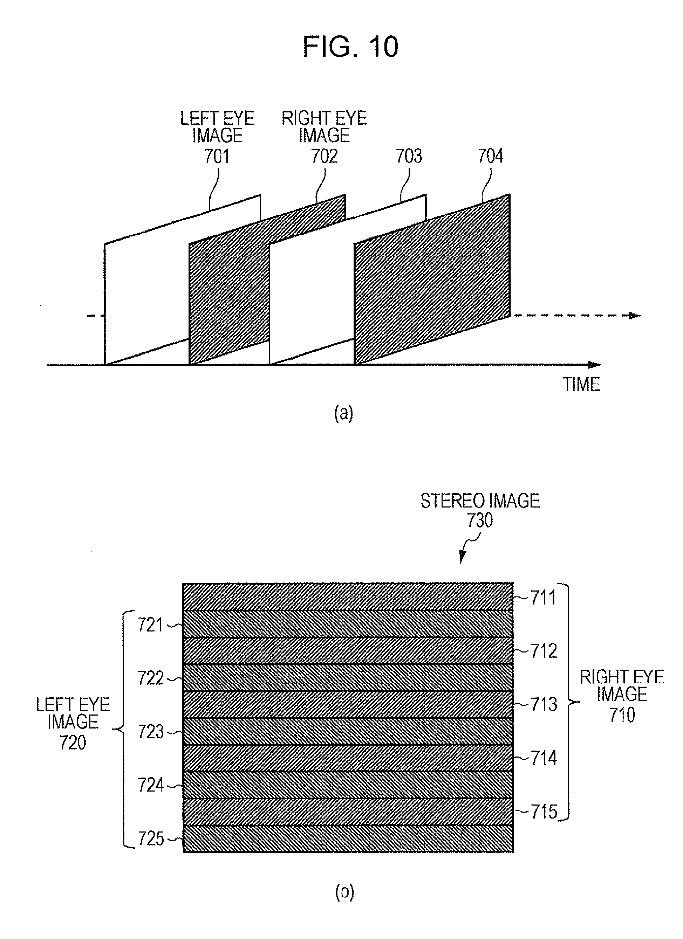

The image display section 170 is configured by a display device or the like, and displays an output image outputted from the output image creating section 140 on the screen. It should be noted that an example of a stereo image as an output image displayed on the image display section 170 will be described in detail with reference to Fig. 10.

### [Example of Functional Configuration of Image Format Determining Section]

Fig. 2 is a block diagram showing an example of the configuration of the image format determining section 120 according to the first embodiment of the present invention. The image format determining section 120 includes an identification information discriminating section 121, an SBS-format-likelihood calculation processing section 122, a TAB-format-likelihood calculation processing section 123, a stereo-display-image-format discriminating section 124, and an image format deciding section 125.

The identification information discriminating section 121 discriminates whether or not identification information is attached to an input image outputted from the image input section 110. Here, identification information is, for example, information for identifying whether an input image is a plane display image or a stereo display image. If identification information is attached to the input image, the identification information discriminating section 121 outputs this input image to the image format deciding section 125. In this case, the image format deciding section 125 discriminates the image format indicated by the identification information attached to the input image, and decides the discriminated image format to be the image format of the input image. On the other hand, if identification information is not attached to the input image, the input image is outputted to the SBS-format-likelihood calculation processing section 122 and the TAB-format-likelihood calculation processing section 123.

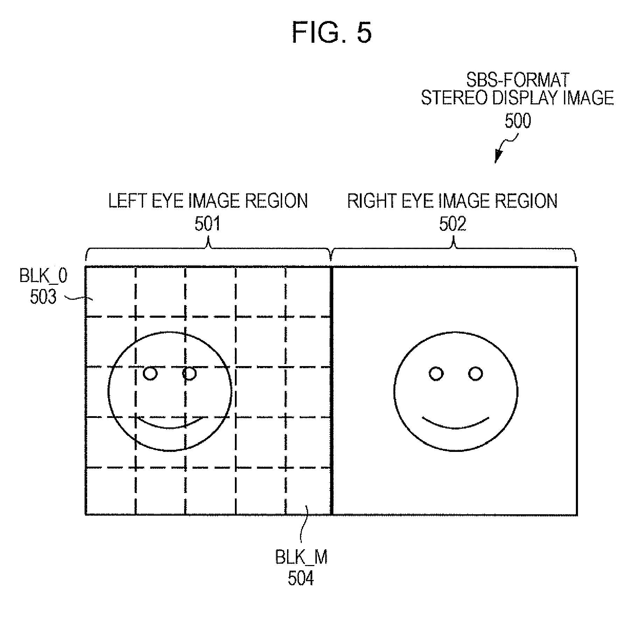

The SBS-format-likelihood calculation processing section 122 calculates a likelihood for evaluating whether or not an input image is a stereo display image in the SBS format, on the basis of a likelihood calculation process. The SBS-format-likelihood calculation processing section 122 outputs the calculated likelihood to the stereo-display-image-format discriminating section 124. It should be noted that the likelihood calculation process by the SBS-format-likelihood calculation processing section 122 will be described in detail with reference to Figs. 5 to 7.

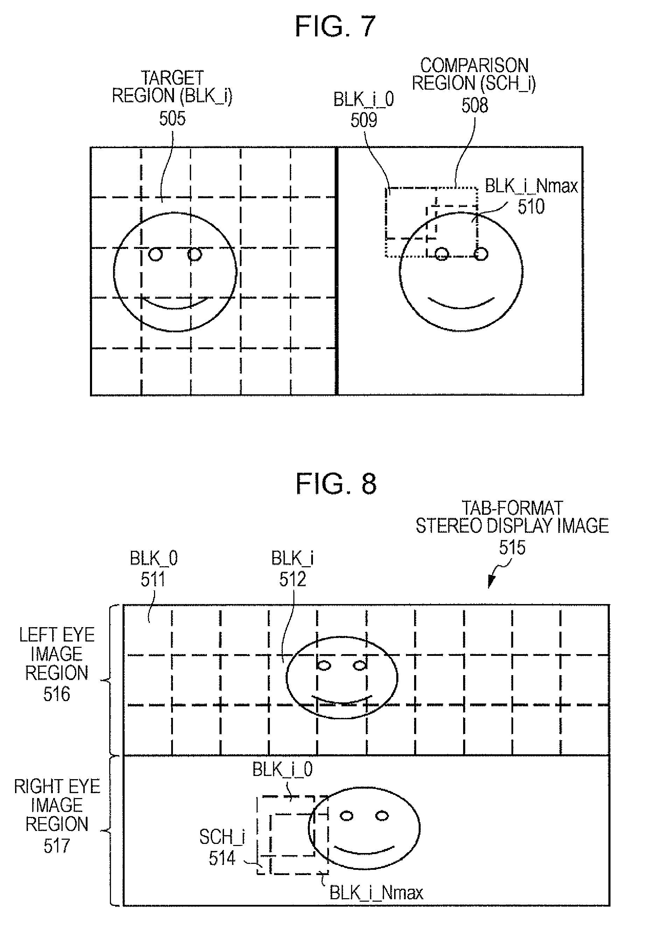

The TAB-format-likelihood calculation processing section 123 calculates a likelihood for evaluating whether or not an input image is a stereo display image in the TAB format, on the basis of a likelihood calculation process. The TAB-format-likelihood calculation processing section 123 outputs the calculated likelihood to the stereo-display-image-format discriminating section 124. It should be noted that the likelihood calculation process by the TAB-format-likelihood calculation processing section 123 will be described in detail with reference to Fig. 8.

The stereo-display-image-format discriminating section 124 discriminates whether an input image is a stereo image in the SBS format or is a stereo image in the TAB format, on the basis of likelihoods outputted from the SBS-format-likelihood calculation processing section 122 and the TAB-format-likelihood calculation processing section 123. For example, the stereo-display-image-format discriminating section 124 sets the larger one of the likelihoods outputted from the SBS-format-likelihood calculation processing section 122 and the TAB-format-likelihood calculation processing section 123 as L_MAX, and sets the smaller one as L__MIN. Then, the stereo-display-image-format discriminating section 124 determines whether or not a discrimination criterion that L_MAX is larger than a predetermined threshold TH1 and L_MIN is smaller than a predetermined threshold TH2 is met. If the stereo-display-image-format discriminating section 124 determines that this discrimination criterion is met, the stereo display image format (SBS format or TAB format) corresponding to the likelihood set as L_MAX is discriminated to be the image format of the input image. Also, if the stereo-display-image-format discriminating section 124 determines that this discrimination criterion is not met, the input image is discriminated to be a plane display image. Then, the stereo-display-image-format discriminating section 124 outputs the discrimination result and the input image to the image format deciding section 125.

The image format deciding section 125 decides the image format of an input image on the basis of identification information of the input image outputted from the identification information discriminating section 121, or a discrimination result outputted from the stereo-display-image-format discriminating section 124. The image format deciding section 125 outputs the input image and this decided image format to the output format determining section 130 via the signal line 129. For example, when an input image is outputted from the identification information discriminating section 121, the image format deciding section 125 discriminates the image format indicated by identification information attached to the input image, and decides the discriminated image format to be the image format of the input image. Also, for example, when an input image and a discrimination result are outputted from the stereo-display-image-format discriminating section 124, the image format deciding section 125 decides the format indicated by this discrimination result to be the image format of the input image.

### [Example of Functional Configuration of Output Format Determining Section]

Fig. 3 is a block diagram showing an example of the configuration of the output format determining section 130 according to the first embodiment of the present invention. The output format determining section 130 includes a displayable format acquiring section 131, a designated-display-format acquiring section 132, a displayable format discriminating section 133, a designated-display-format discriminating section 134, an image format discriminating section 135, and an output format deciding section 136.

The displayable format acquiring section 131 acquires a displayable format outputted (169) from the displayable format determining section 160, with outputting (129) of an input image and an image format from the image format determining section 120 as a trigger. Then, the displayable format acquiring section 131 outputs the acquired displayable format to the displayable format discriminating section 133.

The displayable format discriminating section 133 discriminates the format indicated by the displayable format outputted from the displayable format acquiring section 131 and, depending on the discrimination result, outputs the discrimination result to the designated format discriminating section 134 or the output format deciding section 136. For example, if, as a result of discrimination, information included in the displayable format is "two-dimensional", the displayable format discriminating section 133 outputs a discrimination result including the displayable format to the output format deciding section 136. On the other hand, for example, if, as a result of discrimination, information included in the displayable format is "two-dimensional, time division", the displayable format discriminating section 133 outputs a discrimination result including the displayable format to the designated-display-format discriminating section 134.

The designated-display-format acquiring section 132 acquires a designated display format outputted (159) from the operational input accepting section 150. Then, the designated-display-format acquiring section 132 outputs the acquired designated display format to the designated-display-format discriminating section 134.

The designated-display-format discriminating section 134 discriminates the information indicated by the designated display format upon acquiring a discrimination result outputted from the displayable format discriminating section 133, and outputs a discrimination result to the image format discriminating section 135 or the output format deciding section 136 depending on the discrimination result. For example, if, as a result of discrimination, information included in the designated display format is "two-dimensional", the designated-display-format discriminating section 134 outputs a discrimination result including the designated display format to the output format deciding section 136. On the other hand, if, as a result of discrimination, information included in the designated display format is not "two-dimensional", the designated-display-format discriminating section 134 outputs a discrimination result including the designated display format to the image format discriminating section 135.

The image format discriminating section 135 discriminates the information indicated by the image format outputted (129) from the image format determining section 120 upon acquiring a discrimination result from the designated-display-format discriminating section 134, and outputs the discrimination result to the output format deciding section 136. For example, if, as a result of discrimination, information included in the image format is "two-dimensional", the image format discriminating section 135 outputs the indication to that effect and a discrimination result including the image format to the output format deciding section 136. On the other hand, if, as a result of discrimination, information included in the image format is not "two-dimensional", the image format discriminating section 135 outputs the indication to that effect and a discrimination result including the image format to the output format deciding section 136. It should be noted that when the output format deciding section 136 acquires a discrimination result from the image format discriminating section 135, depending on the discrimination result, the output format deciding section 136 decides "two dimensional", or a three-dimensional system indicated by the displayable format, as the output format. It should be noted that when a discrimination result is not outputted from the designated-display-format discriminating section 134, the image format discriminating section 135 outputs an input image and an image format to the output format deciding section 136 without performing discrimination of the image format.

The output format deciding section 136 decides an output format on the basis of a displayable format, a designated display format, or an image format. Then, the output format deciding section 136 outputs (139) the decided output format, and an image format and an input image which are acquired from the image format discriminating section 135, to the output image creating section 140. For example, when a discrimination result is acquired from the displayable format discriminating section 133, the output format deciding section 136 decides the format indicated by the displayable format included in the discrimination result to be the output format. Also, for example, when a discrimination result is acquired from the designated-display-format discriminating section 134, the output format deciding section 136 decides the format indicated by the designated display format included in the discrimination result to be the output format. Also, for example, when a discrimination result is acquired from the image format discriminating section 135, the output format deciding section 136 decides the format indicated by the image format, or a three-dimensional system indicated by the displayable format, to be the output format depending on the discrimination result.

### [Example of Functional Configuration of Output Image Creating Section]

Fig. 4 is a block diagram showing an example of the configuration of the output image creating section 140 according to the first embodiment of the present invention. The output image creating section 140 includes an output format discriminating section 141, an image format discriminating section 142, an output-image-creation instructing section 143, a plane image creating section 144, a stereo image creating section 145, and an image output section 146.

The output format discriminating section 141 discriminates the information indicated by an output format outputted (139) from the output format determining section 130. Then, the output format discriminating section 141 outputs a discrimination result including the discriminated information to the image format discriminating section 142.

The image format discriminating section 142 discriminates the information indicated by an image format outputted from the output format determining section 130. Then, the image format discriminating section 142 outputs a discrimination result including the discriminated information to the output-image-creation instructing section 143.

The output-image-creation instructing section 143 instructs the plane image creating section 144 or the stereo image creating section 145 which one of a plane image or a stereo image is to be created, on the basis of the discrimination results discriminated by the output format discriminating section 141 and the image format discriminating section 142. For example, if the output format is "two-dimensional", the output-image-creation instructing section 143 causes the plane image creating section 144 to create a plane image as an output image. Also, if the output format is "time division" or "Mpol", the output-image-creation instructing section 143 causes the stereo image creating section 145 to create a stereo image based on the time division system or the Micropol system.
It should be noted that if the image format indicates a stereo display image in the case when a plane image is to be created, the output-image-creation instructing section 143 extracts an image from a right eye image region or a left eye image region constituting the stereo display image. Then, the output-image-creation instructing section 143 instructs the plane image creating section 144 to convert this extracted image into a plane image. Also, if the image format indicates a plane display image in the case when a stereo image is to be created, the output-image-creation instructing section 143 creates a right eye image and a left eye image on the basis of the plane display image, and causes the plane image creating section 144 to create a stereo image on the basis of the right eye image and the left eye image.

The plane image creating section 144 creates a plane image from an input image on the basis of an instruction from the output-image-creation instructing section 143. Then, the plane image creating section 144 outputs the created plane image to the image output section 146.

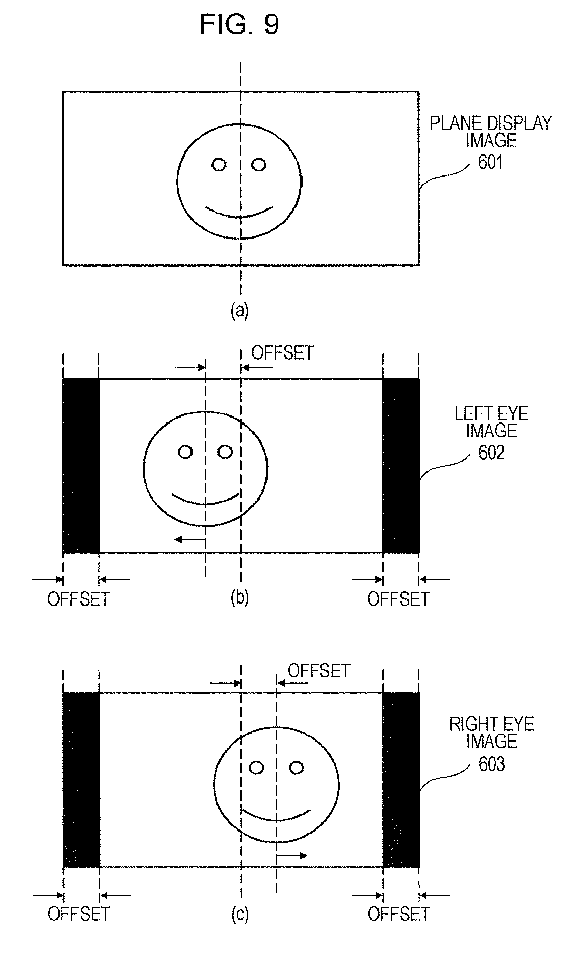

The stereo image creating section 145 creates a stereo image from an input image on the basis of an instruction from the output-image-creation instructing section 143. Then, the stereo image creating section 145 outputs the created stereo image to the image output section 146. It should be noted that with respect to an example of operation in which the stereo image creating section 145 creates a right eye image and a left eye image on the basis of a plane display image and creates a stereo image on the basis of the right eye image and the left eye image, a detailed description will be given with reference to Fig. 9.

The image output section 146 outputs an image outputted from the plane image creating section 144 or the stereo image creating section 145 to the image display section 170 as an output image.

### [Example of Likelihood Calculation Process by SBS-format-likelihood Calculation Processing Section]

Figs. 5 to 7 are diagrams showing an example of a likelihood calculation process in which a likelihood is calculated by the SBS-format-likelihood calculation processing section 122 according to the first embodiment of the present invention. Here, with the case where the input image is a SBS-format stereo display image 500 as an example, a description will be given of an operation in which the SBS-format-likelihood calculation processing section 122 calculates a likelihood. It should be noted that in the SBS-format stereo display image 500, an image made up of a left eye image region 501 and a right eye image region 502 are aligned left and right, respectively.

First, the SBS-format-likelihood calculation processing section 122 splits the SBS-format stereo display image 500 into two left and right split images. Then, the SBS-format-likelihood calculation processing section 122 further splits one of the split images into a plurality of regions with a predetermined size. For example, as shown in Fig. 5, the SBS-format stereo display image 500 is split into two split images, like the split image made up of the left eye image region 501 and the split image made up of the right eye image region 502. Then, of the two split images, the split image made up of the left eye image region 501 is further split into M+1 (M=24 in Fig. 5) regions with a predetermined size. It should be noted that as shown in Fig. 5, of the plurality of regions, a region 503 at the upper left corner of the left eye image region 501 is set as BLK_0. Then, in order from the region 503 at the upper left corner, each region is set as BLK_i (i is a number that differs for each region). Then, a region 504 at the lower right corner of the left eye image region 501 is set as BLK_M. In this way, the SBS-format-likelihood calculation processing section 122 splits one of the split images further into a plurality of regions. Then, the SBS-format-likelihood calculation processing section 122 evaluates the similarity to the other split image for each of the split regions.

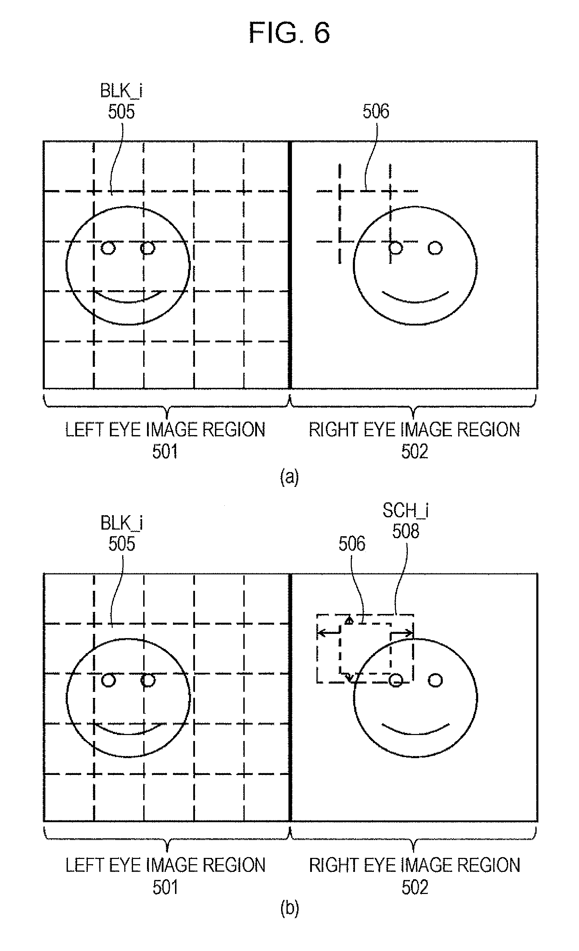

Next, the SBS-format-likelihood calculation processing section 122 sets a comparison region in the other split image. For example, as shown in Fig. 6(a), the SBS-format-likelihood calculation processing section 122 first identifies a region 506 in the right eye image region 502 which is located at the same position as a target region 505 (BLK_i) in the left eye image region 501. Then, as shown in Fig. 6(b), the SBS-format-likelihood calculation processing section 122 sets, as a comparison region 508 (SCH_i), a region obtained by expanding the identified region 506 by 30 pixels to the left and right and by several pixels up and down, for example.

Next, the SBS-format-likelihood calculation processing section 122 evaluates the similarity between the image within the target region 505 in one split image, and the image within the comparison region 508 in the other split image. For example, as shown in Fig. 7, the SBS-format-likelihood calculation processing section 122 sets an image comparison region 509 (BLK_i_0) at the upper left corner of the comparison region 508 (SCH_i). Here, the image comparison region 509 (BLK_i_0) is of the same size as the target region 505 (BLK_i). Then, the SBS-format-likelihood calculation processing section 122 finds the sum of absolute differences in luminance between the image included in the image comparison region 509 (BLK_i_0) and the image included in the target region 505 (BLK_i). Here, the calculated sum of absolute differences in luminance is set as SAD_i_0. Next, the SBS-format-likelihood calculation processing section 122 sets an image comparison region (BLK_i_1) by shifting the image comparison region 509 (BLK_i_0) by one pixel to the right in the horizontal direction. Then, likewise, the SBS-format-likelihood calculation processing section 122 calculates the sum of absolute differences in luminance between the image included in the image comparison region (BLK_i_1) and the image included in the target region 505 (BLK_i), and sets this as SAD_i_1. In this way, the SBS-format-likelihood calculation processing section 122 calculates the sum of absolute differences in luminance from the image included in the target region, for each image comparison region in the comparison region 508 (SCH_i). It should be noted that after calculating the sum of absolute differences in luminance in the image comparison region at the right end of the comparison region, next, the SBS-format-likelihood calculation processing section 122 shifts the image comparison region down by one pixel in the vertical direction and moves the image comparison region to the left end of the comparison region, and sets that position as the next image comparison region. In this way, the SBS-format-likelihood calculation processing section 122 calculates the sums of absolute differences in luminance (SAD_i_0 to SAD_i_Nmax) while continuously moving the image comparison region to an image comparison region 510 (BLK_i_Nmax).

Next, the SBS-format-likelihood calculation processing section 122 extracts the smallest sum of absolute differences of the calculated "Nmax+1" sums of absolute differences in luminance (SAD_i_0 to SAD_i_Nmax). Then, the SBS-format-likelihood calculation processing section 122 determines whether or not the smallest sum of absolute differences in luminance of the calculated sums of absolute differences in luminance is larger than a predetermined threshold. If the smallest sum of absolute differences in luminance is larger than the predetermined threshold as a result of the determination, the SBS-format-likelihood calculation processing section 122 sets the evaluation value L_i on similarity in the target region 505 (BLK_i) to "0". On the other hand, if the smallest sum of absolute differences in luminance is not larger than the predetermined threshold as a result of the determination, the SBS-format-likelihood calculation processing section 122 sets the evaluation value L_i on similarity in the target region 505 (BLK_i) to "1". That is, if the evaluation value is "1", this indicates that the image in the target region and the image in the comparison region are similar.

In this way, the SBS-format-likelihood calculation processing section 122 calculates evaluation values (L_0 to L_M) with respect to all of the plurality of split regions (BLK_0 to BLK_M). Then, the SBS-format-likelihood calculation processing section 122 calculates the total value of the evaluation values (L_0 to L_M) as a likelihood. It should be noted that the larger the value of the likelihood thus calculated, the more similar to each other the split images obtained by splitting an input image left and right.

### [Example of Likelihood Calculation Process by TAB-format-likelihood Calculation Processing Section]

Fig. 8 is a diagram showing an example of a likelihood calculation process in which a likelihood is calculated by the TAB-format-likelihood calculation processing section 123 according to the first embodiment of the present invention. Here, with the case where the input image is a TAB-format stereo display image 515 as an example, a description will be given of an operation in which the TAB-format-likelihood calculation processing section 123 calculates a likelihood. It should be noted that in the TAB-format stereo display image 515, an image made up of a left eye image region 516 and a right eye image region 517 are aligned top and bottom, respectively.

First, the TAB-format-likelihood calculation processing section 123 splits the TAB-format stereo display image 515 into two upper and lower split images. Then, the TAB-format-likelihood calculation processing section 123 further splits one of the split images into a plurality of regions with a predetermined size. For example, as shown in Fig. 8, the TAB-format stereo display image 515 is split into two split images, like the split image made up of the left eye image region 516 and the split image made up of the right eye image region 517. Then, of the two split images, the split image made up of the left eye image region 516 is further split into M+1 (M=29 in Fig. 8) regions with a predetermined size. It should be noted that as shown in Fig. 8, of the plurality of regions, a region 511 at the upper left corner of the left eye image region 516 is set as BLK_0. Then, in order from the region 511 at the upper left corner, each region is set as BLK_i (i is a number that differs for each region). Then, a region 513 at the lower right corner of the left eye image region 516 is set as BLK_M. In this way, the TAB-format-likelihood calculation processing section 123 splits one of the split images further into a plurality of regions. Then, the TAB-format-likelihood calculation processing section 123 evaluates the similarity to the other split image for each of the split regions.

Next, the TAB-format-likelihood calculation processing section 123 sets a comparison region in the other split image. For example, the TAB-format-likelihood calculation processing section 123 first identifies a region in the right eye image region 517 which is located at the same position as a target region 512 (BLK_i) in the left eye image region 516. Then, as shown in Fig. 8, the TAB-format-likelihood calculation processing section 123 sets, as a comparison region 514 (SCH_i), a region that is wider than the target region 512 by several pixels to the left and right and by 30 pixels up and down, for example. Then, as in the likelihood calculation process by SBS-format-likelihood calculation processing section 122, the TAB-format-likelihood calculation processing section 123 finds the sum of absolute differences in luminance between the image in the target region 512 (BLK_i) and the image in each of image comparison regions in the comparison region 514 (SCH_i). Then, the TAB-format-likelihood calculation processing section 123 extracts the smallest sum of absolute differences in luminance, and compares the sum against a predetermined value to calculate an evaluation value L_i. Then, the TAB-format-likelihood calculation processing section 123 calculates evaluation values (L_0 to L_M) with respect to all of the plurality of split regions (BLK_0 to BLK_M). Then, the TAB-format-likelihood calculation processing section 123 calculates the total value of the evaluation values (L_0 to L_M) as a likelihood. It should be noted that the larger the value of the likelihood thus calculated, the more similar to each other the split images obtained by splitting an input image top and bottom.

### [Example of Creation of Right Eye Image and Left Eye Image by Stereo Image Creating Section]

Fig. 9 is a diagram for explaining an example in which a right eye image and a left eye image are created from a plane display image by the stereo image creating section 145 according to the first embodiment of the present invention. In this example, a left eye image 602 and a right eye image 603 are created from a plane display image 601 shown in Fig. 9(a).

The stereo image creating section 145 creates a right eye image and a left eye image, upon receiving an instruction from the output-image-creation instructing section 143 for creating a right eye image and a left eye image on the basis of a plane display image. For example, as shown in Fig. 9(b), the stereo image creating section 145 creates the left right image 602 by moving the plane display image 601 to the left by an offset of 30 pixels. It should be noted that since no image exists in the region on the right end side after the plane display image 601 is moved by the offset, this portion is set as a black region as shown in Fig. 9(b). Also, the left end side of the left eye image 602 is also set as a black region with a width equal to the offset.

Also, for example, as shown in Fig. 9(c), the stereo image creating section 145 creates the right eye image 603 by moving the plane display image 601 to the right by an offset of 30 pixels. It should be noted that since no image exists in the region on the left end side after the plane display image 601 is moved by the offset, this portion is set as a black region as shown in Fig. 9(c). Also, the right end side of the right eye image 603 is also set as a black region with a width equal to the offset.

In this way, the stereo image creating section 145 creates a pair of the left eye image 602 and the right eye image 603 which can produce a parallax effect.

### [Example of Stereo Image]

Fig. 10 is a diagram showing an example of a stereo image according to the first embodiment of the present invention.

Fig. 10(a) shows an example of a stereo image based on the time division system. The horizontal axis shown in Fig. 10(a) represents a temporal axis. In the case of this example, the stereo image creating section 145 extracts a left eye image and a right eye image from a stereo display image, and outputs these left eye image and right eye image to the image output section 146. The image output section 146 having acquired these outputs the left eye image and the right eye image to the image display section 170. A left eye image and a right eye image are alternately displayed on the screen of the image display section 170. For example, in the example shown in Fig. 10(a), the stereo image creating section 145 extracts a left eye image 701 and a right eye image 702 from one stereo display image of two input images. Then, the stereo image creating section 145 extracts a left eye image 703 and a right eye image 704 from the other stereo display image. When left eye images and right eye images are successively extracted from stereo display images in this way, as shown in Fig. 10(a), for example, the left eye image 701, the right eye image 702, the left eye image 703, and the right eye image 704 are displayed on the screen of the image display section 170 at equal time intervals in that order.

Fig. 10(b) shows an example of a stereo image based on the Micropol system. In the case of a stereo image based on the Micropol system, the stereo image creating section 145 creates, for example, a stereo image 730 as shown in Fig. 10(b) on the basis of a left eye image and a right eye image in a stereo display image. In the stereo image 730, images made up of the left eye image region 720 extracted from a left eye image, and a right eye image region 710 extracted from the right eye image are placed alternately at each one vertical pixel. The image made up of the left eye image region 720 is obtained by extracting all the images in the horizontal direction which are located at the even numbers in the vertical direction of the left eye image. Also, the image made up of the right eye image region 710 is obtained by extracting all the images in the horizontal direction which are located at the odd numbers in the vertical direction of the right eye image. For example, in the stereo image 730, the image made up of a right eye image region 711 is placed at the first position in the vertical direction. Then, the image made up of a left eye image region 721 is placed at the second position in the vertical direction. Then, the image made up of a right eye image region 712 is placed at the third position in the vertical direction. In this way, the stereo image 730 in which images made up of the right eye image regions 711 to 715 and images made up of the left eye image regions 721 to 725 are placed alternately is created by the stereo image creating section 145.

### [Example of Operation of Image Processing Apparatus]

Next, an example of the operation of the image processing apparatus 100 according to the first embodiment of the present invention will be described.

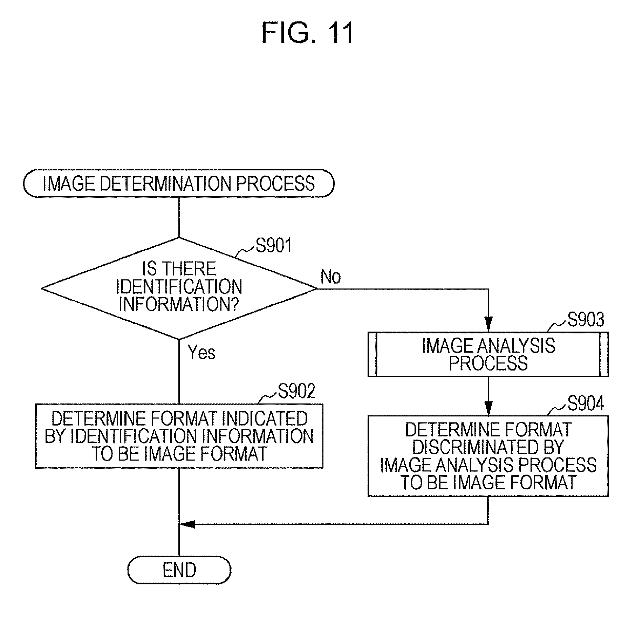

Fig. 11 is a flowchart showing the processing steps of an image determination process by the image processing apparatus 100 according to the first embodiment of the present invention.

First, the identification information discriminating section 121 discriminates whether or not identification information is attached to an input image (step S901). If identification information is not attached to the input image (step S901; No), an image analysis process is executed (step S903). Next, the identification information discriminating section 121 determines the format discriminated by the image analysis process to be an image format (step S904). Then, the image determination process ends.

On the other hand, if identification information is attached to the input image (step S901; Yes), the image format deciding section 125 discriminates the image format indicated by the identification information, and determines this to be an image format (step S902). Then, the image determination process ends. It should be noted that step S902 and step S904 are each an example of an image format determining step described in the claims.

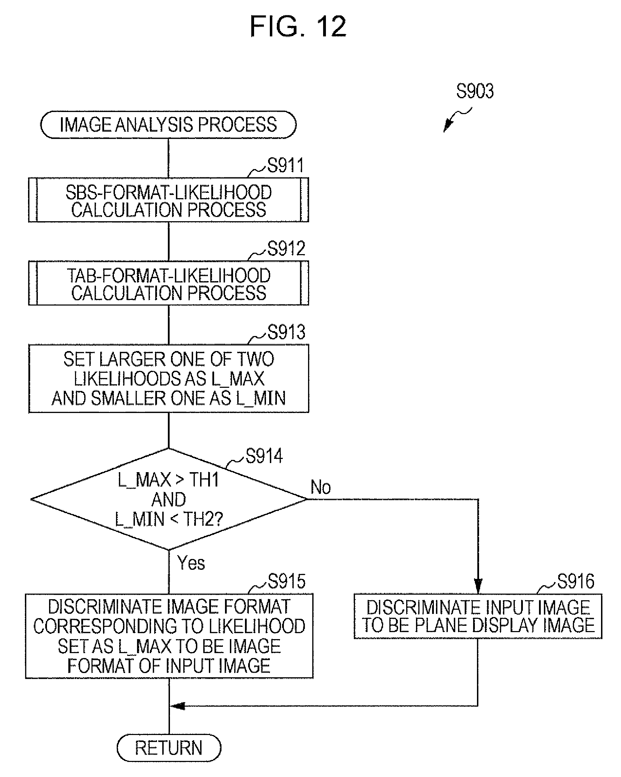

Fig. 12 is a flowchart showing the processing steps of an image analysis process (step S903) by the image processing apparatus 100 according to the first embodiment of the present invention.

First, the SBS-format-likelihood calculation processing section 122 calculates a likelihood in accordance with a likelihood calculation process (step S911). Next, the TAB-format-likelihood calculation processing section 123 calculates a likelihood in accordance with a likelihood calculation process (step S912). Next, of the likelihoods outputted from the SBS-format-likelihood calculation processing section 122 and the TAB-format-likelihood calculation processing section 123, the stereo-display-image-format discriminating section 124 sets the larger one as L_MAX and the smaller one as L_MIN (step S913). Then, the stereo-display-image-format discriminating section 124 discriminates whether or not a discrimination criterion L_MAX>H1 and L_MIN<TH2 is met. If the discrimination criterion is met (step S914; Yes), the stereo-display-image-format discriminating section 124 discriminates the format (SBS format or TAB format) corresponding to the likelihood set as L_MAX to be the image format of an input image (step S915). On the other hand, if the discrimination criterion is not met (step S914; No), the stereo-display-image-format discriminating section 124 discriminates an input image to be a plane display image (step S916). When the image format of the input image has been discriminated by the stereo-display-image-format discriminating section 124 (step S915 and step S916), the image analysis process ends and the processing returns to the image determination process.

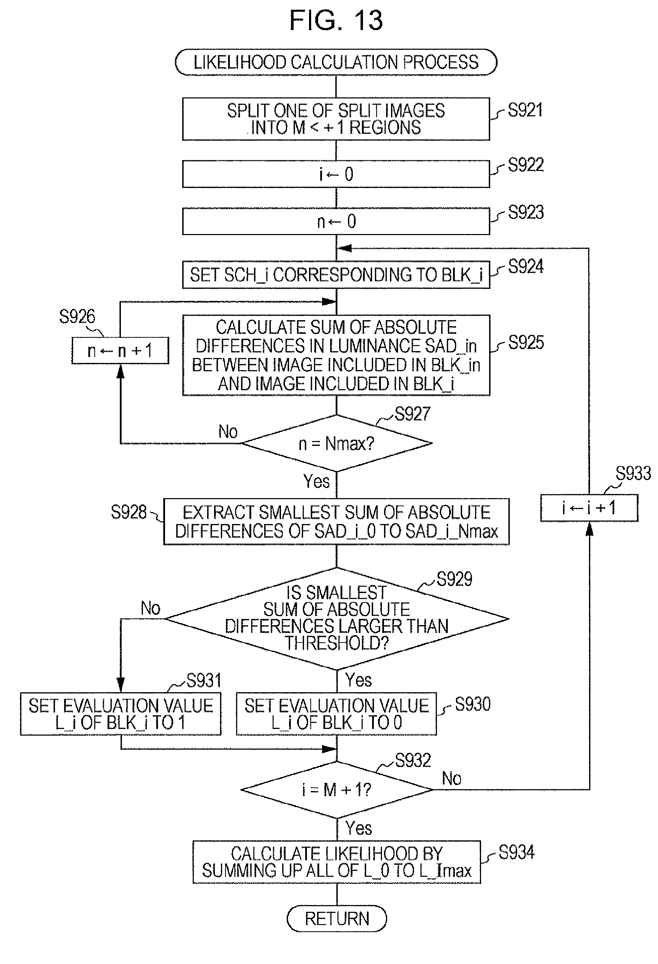

Fig. 13 is a flowchart showing the processing steps of a likelihood calculation process by the image processing apparatus 100 according to the first embodiment of the present invention. It should be noted that the likelihood calculation process is a process performed by the SBS-format-likelihood calculation processing section 122 or the TAB-format-likelihood calculation processing section 123.

First, an input image is split into two split images, and one of the split images is further split into a plurality of (M+1) regions (step S921). Then, a variable i is set to "0" (step S922). Also, a variable n is set to "0" (step S923).

Next, a comparison region SCH_i corresponding to a target region BLK_i is set in the other split image (step S924). Next, the sum of absolute differences in luminance SAD_i_n between the image included in an image comparison region BLK_i_n and the image included in the target region BLK_i is calculated (step S925).

Next, it is discriminated whether or not n=Nmax (step S927). If n=Nmax does not hold (step S927; No), 1 is added to n (step S926), and the processing returns to step S925 in which the sum of absolute differences in luminance is calculated. On the other hand, if n=Nmax (step S927; Yes), the smallest sum of absolute differences in luminance of all the calculated sums of absolute differences in luminance (SAD_i_0 to SAD_i_Nmax) is extracted (step S928).

Then, it is discriminated whether or not the smallest sum of absolute differences in luminance is larger than a predetermined threshold (step S929). If the smallest sum of absolute differences in luminance is larger than the predetermined threshold (step S929; Yes), the evaluation value L_i of the target region BLK_i is set to "0" (step S930). On the other hand, if the smallest sum of absolute differences in luminance is not larger than the predetermined threshold (step S929; No), the evaluation value L_i of the target region BLK_i is set to "1" (step S931).

Next, it is discriminated whether or not i=M (step S932). If i=M does not hold (step S932; No), 1 is added to i (step S933), and the processing returns to step S924 in which the comparison region SCH_i corresponding to the target region BLK_i is set. On the other hand, if i=M (step S932; Yes), a likelihood is calculated by summing up all the evaluation values (L_0 to L_M) (step S934). Then, the likelihood calculation process ends, and the processing returns to the image analysis process.

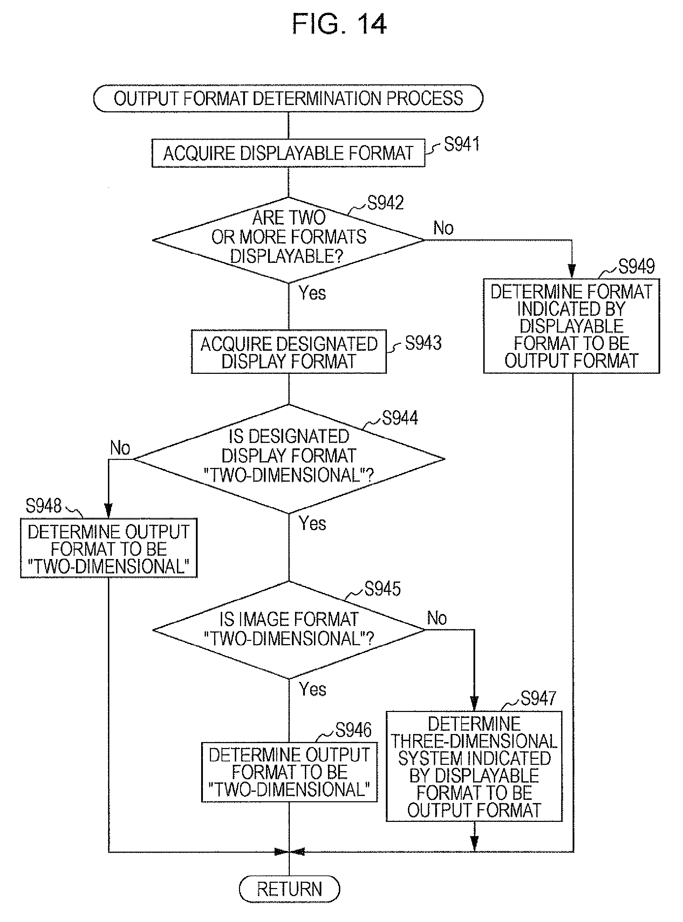

Fig. 14 is a flowchart showing the processing steps of an output format determination process by the image processing apparatus 100 according to the first embodiment of the present invention.

First, the displayable format acquiring section 131 acquires displayable format from the displayable format determining section 160 (step S941). Next, the displayable format discriminating section 133 discriminates whether or not the number of formats indicated by the displayable format is 2 or more (step S942). It should be noted that step S942 is an example of a displayable format determining step described in the claims. If the number of formats is not more than 2 (step S942; No), the output format deciding section 136 determines the format indicated by the displayable format to be the output format (step S949). Then, the output format determination process ends. On the other hand, if the number of formats is 2 or more (step S942; Yes), the designated-display-format acquiring section 132 acquires a designated display format from the operational input accepting section 150 (step S943).

Next, the designated-display-format discriminating section 134 discriminates whether or not the designated display format is "two-dimensional" (step S944). If the designated display format is "two-dimensional" (step S944; Yes), the output format deciding section 136 determines the output format to be "two-dimensional". On the other hand, if the designated display format is not "two-dimensional" (step S944; No), the image format discriminating section 135 discriminates whether or not the image format is "two-dimensional" (step S945).

If the image format is "two-dimensional" (step S945; Yes), the output format deciding section 136 determines the output format to be "two-dimensional" (step S946). Then, the output format determination process ends. On the other hand, if the image format is not "two-dimensional" (step S945; No), the output format deciding section 136 determines a three-dimensional system indicated by the displayable format to be the output format (step S947). Then, the output format determination process ends. It should be noted that steps S946 to 949 are each an example of an output format determining step described in the claims.

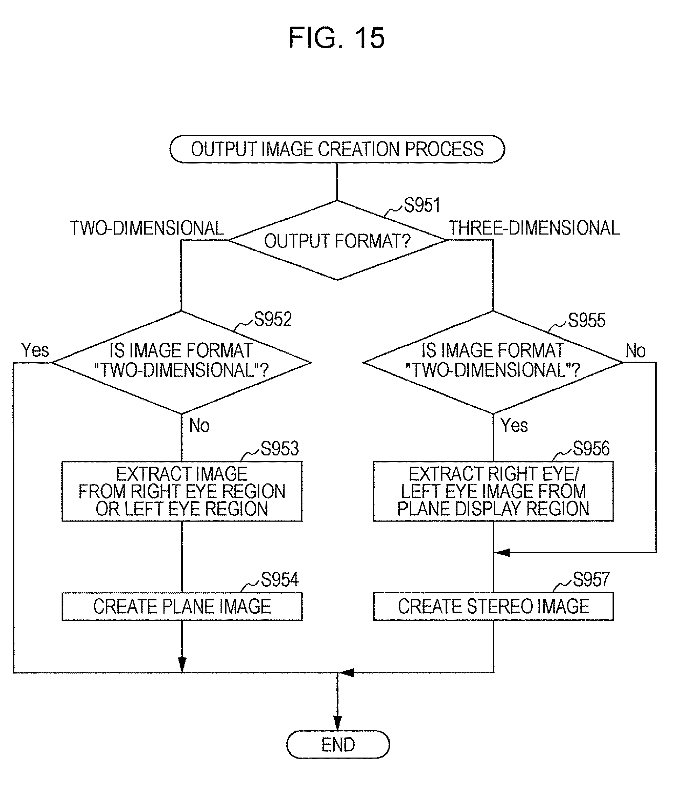

Fig. 15 is a flowchart showing the processing steps of an output image creation process by the image processing apparatus 100 according to the first embodiment of the present invention.

First, the output format discriminating section 141 discriminates the information indicated by an output format outputted from the output format determining section 130 (step S951). If the output format is "two-dimensional" (step S951: two-dimensional), the image format discriminating section 142 discriminates whether or not the image format is "two-dimensional" (step S952). Then, if the image format is not "two-dimensional" (step S952; No), the plane image creating section 144 extracts the image of either the right eye image region or the left eye image region of an input image (step S953). Then, the plane image creating section 144 creates a plane image from the extracted image (step S954). On the other hand, if the image format is "two-dimensional" (step S952; Yes), the output image creating process ends.

On the other hand, if the output format is a three-dimensional system indicating either "Mpol" or "time division" (step S951; three-dimensional), the image format discriminating section 142 discriminates whether or not the image format is "two-dimensional" (step S955). Then, if the image format is "two-dimensional" (step S955; Yes), the stereo image creating section 145 creates a left eye image and a right eye image from a plane display image (step S956). Then, the stereo image creating section 145 creates a stereo image on the basis of the left eye image and the right eye image (step S957). Then, the output image creation process ends. On the other hand, if the image format is not "two-dimensional" (step S955; No), the stereo image creating section 145 creates a stereo image on the basis of a stereo display image (step S957). Then, the output image creation process ends. It should be noted that step S954 and step S957 are each an example of an image creating step described in the claims.

As described above, according to the first embodiment of the present invention, an output format is determined on the basis of an output format determination process. Also, an output format is determined on the basis of the displayable format of an output image which can be displayed on the display section. Thus, the image format of an input image is determined appropriately, and an appropriate output image adapted to the image format is displayed. Hence, if, for example, a plane display image and a stereo display image are inputted while being mixed with each other, the image format is determined appropriately, and an output image that can be displayed on the display section is displayed. Since an appropriate image is displayed in this way, the user can view the output image displayed on the display section without stress. Also, since the image format of an input image is determined even if identification information for identifying the image format is not attached to the input image, an appropriate output image is displayed on the screen of the display section.

### <2. Second Embodiment>

Next, a second embodiment of the present invention will be described.

### [Example of Internal Configuration of Image Processing Apparatus]

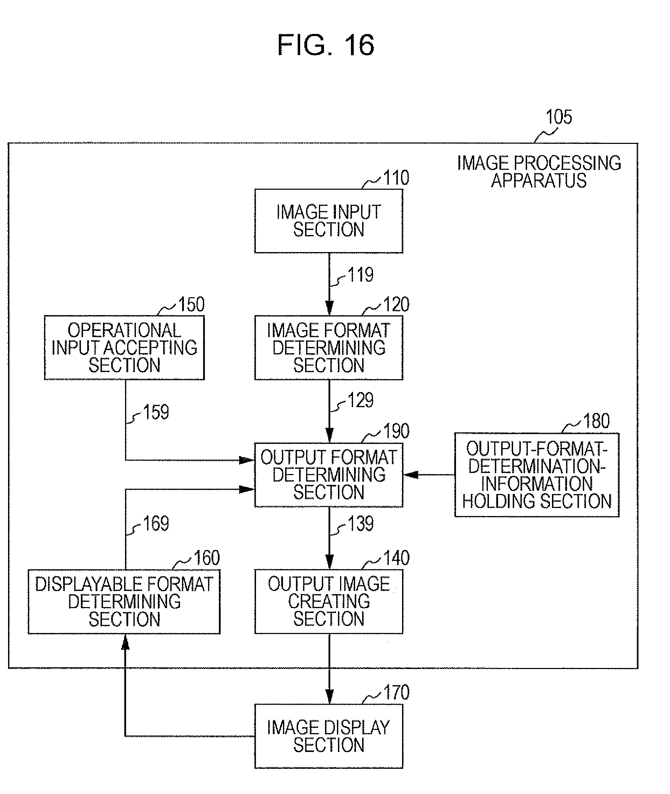

Fig. 16 is a block diagram showing an example of the configuration of an image processing apparatus 105 according to the second embodiment of the present invention. The configuration of the image processing apparatus 105 according to the second embodiment is such that an output-format-determination-information holding section 180 is added to the configuration of the image processing apparatus 100 according to the first embodiment. In the following description, description of commonalities with the image processing apparatus 100 shown in Fig. 1 will be omitted, and the description will focus on differences.

An output format determining section 190 identifies an output format by output format determination information held in the output-format-determination-information holding section 180 on the basis of the combination of an image format, a displayable format, and a designated display format, and determines this identified output format to be the output format of an input image.

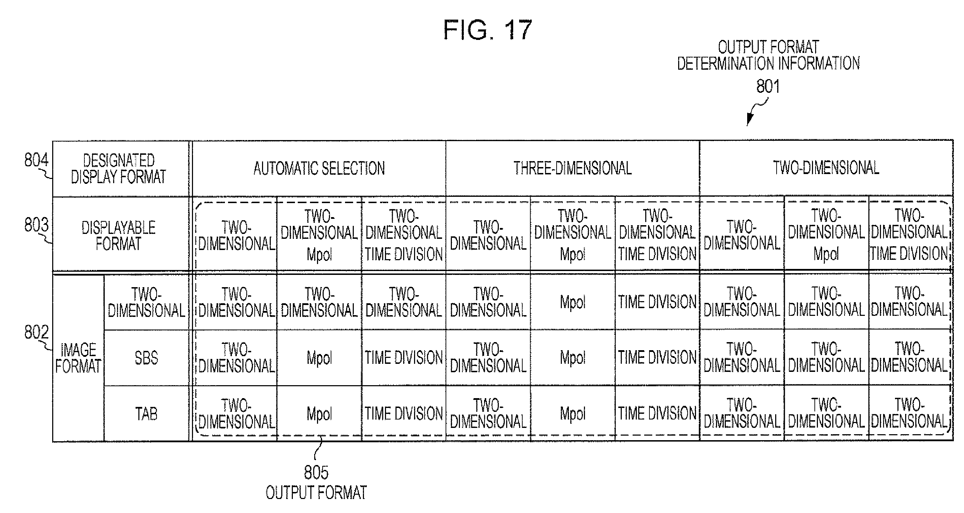

The output-format-determination-information holding section 180 holds output format determination information associating an output format with each combination of an image format, a displayable format, and a designated display format. It should be noted that the output-format-determination-information holding section 180 is an example of a holding section described in the claims. It should be noted that the output format determination information will be described in detail with reference to Fig. 17.

### [Example of Format Determination Information]

Fig. 17 is a diagram showing an example of output format determination information 801 according to the second embodiment of the present invention. The output format determination information 801 associates an output format with each combination of an image format 802, a displayable format 803, and a designated display format 804. For example, if the image format 802 is "TAB", the displayable format 803 is "two-dimensional, Mpol", and the designated display format 804 is "automatic selection", "Mpol" is identified as an output format 805 from the output format determination information 801. It should be noted that, for example, if a designated displayed format is not outputted from the operational input accepting section 150 due to no operation being made by the user, an output format may be identified from the displayable format 803 and the image format 802 corresponding to "automatic selection" of the designated display format.

### [Example of Functional Configuration of Output Format Determining Section]

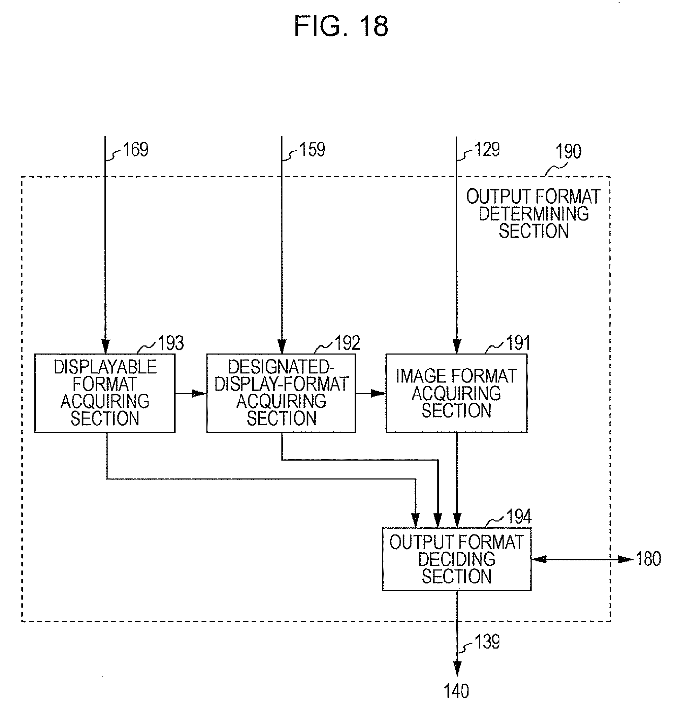

Fig. 18 is a block diagram showing an example of the configuration of the output format determining section 190 according to the second embodiment of the present invention. The output format determining section 190 includes an image format acquiring section 191, a designated-display-format acquiring section 192, a displayable format acquiring section 193, and an output format acquiring section 194.

The image format acquiring section 191 acquires an image format outputted (129) from the image format determining section 120. Then, the image format acquiring section 191 outputs the acquired image format to the output format acquiring section 194.

The designated-display-format acquiring section 192 acquires a designated display format outputted (159) from the operational input accepting section 150. Then, the designated-display-format acquiring section 192 outputs the acquired designated display format to the output format acquiring section 194.

The displayable format acquiring section 193 acquires a displayable format outputted (169) from the displayable format determining section 160. Then, the displayable format acquiring section 193 outputs the acquired displayable format to the output format acquiring section 194.

The output format acquiring section 194 references the output-format-determination-information holding section 180 to identify an output format from the combination of an image format, a designated display format, and a displayable format. Then, the output format acquiring section 194 outputs (139) the identified output format to the output image creating section 140.

### [Example of Operation of Image Processing Apparatus]

Next, an example of the operation of the image processing apparatus 105 according to the second embodiment of the present invention will be described.

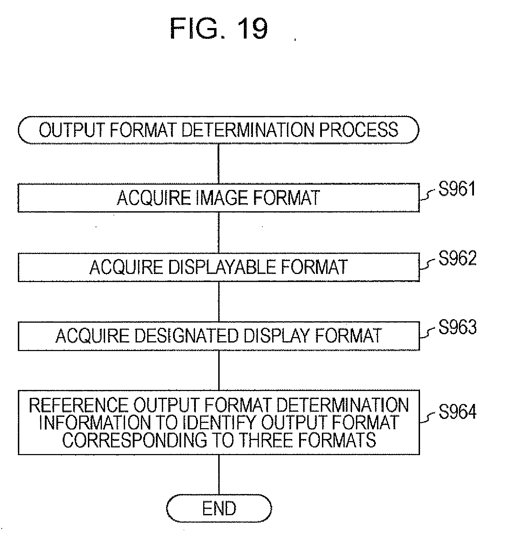

Fig. 19 is a flowchart showing the processing steps of an output format determination process according to the second embodiment of the present invention.

First, the output format determining section 190 acquires an image format from the image format determining section 120 (step S961). Next, the output format determining section 190 acquires a displayable format from the displayable format determining section 160 (step S962). Next, the output format determining section 190 acquires a designated display format from the operational input accepting section 150 (step S963). Next, the output format determining section 130 references the output format determination information to identify an output format on the basis of the combination of the image format, the displayable format, and the designated display format (step S964). Then, the output format determination process ends.

As described above, according to the second embodiment of the present invention, an output format is identified on the basis of the output format determination information. Consequently, for example, the output format can be easily changed by changing the contents of the output format determination information.

It should be noted that the embodiments of the present invention are illustrative of an example for implementing the present invention, and have correspondence to each of the invention-specifying matters in the claims as described above. It should be noted, however, that the present invention is not limited to the embodiments, and various modifications can be made without departing from the scope of the present invention.

The processing steps described with reference to the embodiments of the present invention may be grasped as a method having a series of these steps, or may be grasped as a program for causing a computer to execute a series of these steps or a recording medium that stores the program. As this recording medium, for example, a CD (Compact Disc), an MD (MiniDisc), a DVD (Digital Versatile Disk), a memory card, a Blur-ray Disc (registered trademark), or the like can be used.

### Reference Signs List

100, 105 image processing apparatus
110 image input section
120 image format determining section
121 identification information discriminating section
122 SBS-format-likelihood calculation processing section
123 TAB-format-likelihood calculation processing section
124 stereo-display-image-format discriminating section
125 image format deciding section
130, 190 output format determining section
131 displayable format acquiring section
132 designated-display-format acquiring section
133 displayable format discriminating section
134 designated-display-format discriminating section
135 image format discriminating section
136 output format deciding section
140 output image creating section
141 output format discriminating section
142 image format discriminating section
143 output-image-creation instructing section
144 plane image creating section
145 stereo image creating section
146 image output section
150 operational input accepting section
160 displayable format determining section
170 image display section
180 output-format-determination-information holding section
191 image format acquiring section
192 designated-display-format acquiring section
193 displayable format acquiring section
194 output format acquiring section
500 SBS-format stereo display image
515 TAB-format stereo display image
730 stereo image
801 output format determination information

## Claims

1. An image processing apparatus comprising:
an image format determining section that determines whether an image format of an input image is an image format for a plane display image viewed by monocular vision, or is an image format for a stereo display image including a right eye image region and a left eye image region;
a displayable format determining section that determines a displayable format of an output image which can be displayed on a display section;
an output format determining section that determines an output format of the output image displayed on the display section on the basis of the image format and the displayable format; and
an image creating section that creates the output image from the input image on the basis of the output format determined by the output format determining section.

2. The image processing apparatus according to Claim 1,
wherein the image format determining section splits the input image into two split images and discriminates whether or not the two split images are similar to each other, and determines the image format of the input image to be the image format for the stereo display image if the two split images are similar to each other.

3. The image processing apparatus according to Claim 2,
wherein the image format determining section performs the discrimination of the similarity by splitting one of the two split images further into a plurality of regions, and comparing, for each of the plurality of regions, an image in the region with an image corresponding to the region in the other of the two split images.

4. The image processing apparatus according to Claim 1, further comprising an accepting section that accepts an output format of the output image displayed on the display section as a designated display format,
wherein the output format determining section determines the output format of the output image on the basis of the image format, the displayable format, and the designated display format.

5. The image processing apparatus according to Claim 4, further comprising a holding section that holds the output format in association with each combination of the image format, the displayable format, and the designated display format,
wherein the output format determining section identifies the output format held by the holding section on the basis of a combination of the image format determined by the image format determining section, the displayable format determined by the displayable format determining section, and the designated display format accepted by the accepting section, and determines the identified output format to be the output format of the output image.

6. An image processing method comprising:
an image format determining step of determining whether an image format of an input image is an image format for a plane display image viewed by monocular vision, or is an image format for a stereo display image including a right eye image region and a left eye image region;
a displayable format determining step of determining a displayable format of an output image which can be displayed on a display section;
an output format determining step of determining an output format of the output image displayed on the display section on the basis of the image format and the displayable format; and
an image creating step of creating the output image from the input image on the basis of the output format determined by the output format determining section.

7. A program for causing a computer to execute:
an image format determining step of determining whether an image format of an input image is an image format for a plane display image viewed by monocular vision, or is an image format for a stereo display image including a right eye image region and a left eye image region;
a displayable format determining step of determining a displayable format of an output image which can be displayed on a display section;
an output format determining step of determining an output format of the output image displayed on the display section on the basis of the image format and the displayable format; and
an image creating step of creating the output image from the input image on the basis of the output format determined by the output format determining section.
